(19) Europäisches Patentamt
European Patent Office
Office européen des brevets

(11) Publication number: **0 305 006 A2**

# (12) EUROPEAN PATENT APPLICATION

(21) Application number: 88201788.2

(22) Date of filing: 23.08.88

(51) Int. Cl.⁴: **C08F 299/04 , C09D 3/00 , C08L 67/08**

(30) Priority: 28.08.87 NL 8702018

(43) Date of publication of application: 01.03.89 Bulletin 89/09

(84) Designated Contracting States: AT BE CH DE ES FR GB IT LI NL SE

(71) Applicant: **STAMICARBON B.V.**
**Mijnweg 1**
**NL-6167 AC Geleen(NL)**

(72) Inventor: **Hofland, Adriaan**
**Chopinstraat 49**
**NL-8031 ZH Zwolle(NL)**
Inventor: **Paauwe, Joannes Marius**
**Luzacware 9**
**NL-8014 PJ Zwolle(NL)**

## (54) Resin composition based on a polymer and an ester.

(57) The invention relates to a resin composition based on a polymer and an ester of an unsaturated fatty acid and an alcohol containing a terminal unsaturation. The resin composition contains as ester a compound with the formula:

$$R^1 - \overset{O}{\overset{\|}{C}} - O - R^2$$

where:
$R^1$ is an alkyl radical with 10-24 carbon atoms and at least one non-terminal ethylenically unsaturated bond and
$R^2$ is an organic group comprising one or more terminal allylether groups.

The resin composition is substantially 100%-solid.

EP 0 305 006 A2

## RESIN COMPOSITION BASED ON A POLYMER AND AN ESTER

The invention relates to a resin composition based on a polymer and an ester of an unsaturated fatty acid and an alcohol that contains a terminal unsaturation.

A resin composition based on a polymer and such an ester is known from US-A-4311624. This publication describes a resin composition, which contains film-forming components such as drying oils, alkyd resins and vinyl addition polymers, and a mixture of (a) a dicyclopentenyloxyalkyl ester of an ethylenically unsaturated mono- or dicarboxylic acid and (b) a (meth)acryloxyalkyl ester of an unsaturated fatty acid. The compounds mentioned as (a) and (b) are also known as reactive diluents.

Such resin compositions are particularly used as binding agents in coating compositions. Nowadays, efforts are made to use coating compositions with a lower percentage of, or even without (the so-called '100%-solids system), volatile solvents on account of the environmental problems connected with the use of these organic solvents and the associated environmental laws. One of the possibilities of solving these problems is to use reactive diluents in the resin compositions for coating compositions. These diluents are usually compounds with a low viscosity and a high boiling point, or low saturated vapour pressure, which act as solvent during the process but can subsequently also be polymerized along with the rest of the compound. In this manner the environmental pollution caused by the conventional solvents can be reduced. The requirements to be met by these compounds are such that on the one hand they can be used as cross-linking agents and that, on the other, they contribute towards the good properties that a coating composition is required to have.

A disadvantage of the resin compostions based on a polymer and the known reactive diluents and the resulting coating compositions is that the monomers used as reactive diluents are too volatile and/or the properties of the resulting coating compositions, such as the drying properties, do not meet the requirements and/or the monomers to be used as reactive diluents are difficult to prepare and very expensive and/or the monomers are insufficiently soluble and do not mix sufficiently with the polymers and/or the reactive diluents do not have an optimum diluting effect.

The aim of the invention is to provide a resin composition based on a polymer and an ester as a reactive diluent that does not present the aforementioned disadvantages.

The resin composition according to the invention is characterized in that, as ester, the resin composition contains a compound with the formula:

$$R^1-\overset{O}{\overset{\|}{C}}-O-R^2$$

where:

$R^1$ is an alkyl radical with 10-24 carbon atoms and at least one non-terminal ethylenically unsaturated bond and

$R^2$ is an organic group comprising one or more terminal allylether groups and that,

the resin composition is substantially 100%-solid.

The non-prepublished European Patent Application 87304501.7 (publication number EP-A-253474) describes a surface coating composition comprising a film-forming material, a volatile organic solvent and a reactive solvent and/or diluent characterized in that the reactive solvent comprises one or more ether-esters of the formula:

$$(R^1-COO)_a-\underset{}{\overset{(OH)_c}{\overset{|}{R}}}-(OCH_2-CH=CH_2)_b$$

in which

R is a polyvalent hydrocarbyl group;

$R^1$ is an ethylencially unsaturated hydrocarbyl group containing from 18 to 24 carbon atoms; and

a, b and c are each integers such that the total of a, b and c is from 3 to 6, a and b are each at least 1 and the total of a and b is at least 3.

The coating compositions that are obtained by using the resin composition according to the invention present unexpectedly good drying properties.

The weight ratio of the ester and the polymer may, in absence of volatile organic solvents (the so-called '100%-solid systems') vary within wide limits. If a very low viscosity is desired, up to 80% by weight ester

may be used.

According to a preferred embodiment of the invention, the resin composition contains 20-99 wt% polymer and 1-80 wt% ester (the weight percentages being based on the total amount of polymer and ester).

Preferably the resin composition contains 50-95 wt% polymer and 5-50 wt% ester, in particular 70-90 wt% polymer and 10-30 wt% ester.

According to another preferred embodiment of the invention the ester is applied in combination with an oligomer based on for example trimellitic acid anhydride, pentaerytritol and soya bean fatty acid. The resin composition contains preferably 20-99% by weight polymer, 5-50% by weight ester and 0,1-50% by weight oligomer. The weight ratio in the oligomer between trimellitic acid anhydride, pentaerytritol and soya bean fatty acid is for example 1 : 3 : 15.

As polymer, the resin composition according to the invention may contain any polymer that is cured by radical polymerization. In particular, all polymers that are air-dryable are suitable, for instance an alkyd resin, a (modified) condensation polymer or a vinyl addition polymer. Instead of the polymer, drying oil (or oils) may be used.

According to a preferred embodiment of the invention, an alkyd resin is used as polymer. Alkyd resins are prepared by esterifying polyalcohols and polybasic acids or their anhydrides, usually also with fatty acids. Most alkyd resins are very viscous; for practical use they are therefore sold in solution. The properties are in the first place determined by the nature and proportion of the alcohols and acids used and by the degree of condensation. Certain modifications in the composition, such as styrene and silicone alkyds, result in products with special properties. Alkyd resins obtained by esterifying a dibasic acid, mostly phthalic acid, and a trivalent alcohol, usually glycerol, are thermosetting brittle resins that are soluble in alcohol at a low degree of condensation. Those obtained by esterifying a bivalent alcohol, for example glycol, and a dibasic acid, such as phthalic acid, whether or not with addition of a non-setting fatty acid, are thermoplastic resins which dissolve in hydrocarbons and are used mainly as plasticizers. The alkyd resins can be classified in fatty alkyds, with a fatty acid content of more than 60%, semi-fatty alkyds with a fatty acid content of between 45 and 60% and lean alkyds with a fatty acid content of less than 45%. The consistency varies from syrupy in the case of the fatty alkyd resins to brittle in the case of the lean alkyd resins. In the paint industry alkyd resins are often used as binding agents: favourable properties are, for instance, their fast drying and curing. The great variety of types presents the possibility of attuning the choice to the purpose (so-called tailor-made types): lean, fast-drying types are used, for instance, for spray paints for industry; fatter types that dry somewhat slower are on the other hand very suitable for application by brush and, consequently, for house paints. In this manner each of the many types has its own field of application. According to a preferred embodiment of the invention the alkyd resins which are prepared in the presence of 3-20 wt% monoalcohol with between 5 and 13 carbon atoms, such as hexanol, nonanol or decanol, are applied. Among other effects, this increases the solubility in alkanes. Alkanes are less harmful solvents than solvents containing aromatics.

Alkyd resins are combined with, for instance, carbamide and melamine resins for use in stoving varnishes; in combination with cellulose nitrate (nitrocellulose) they yield the so-called combination lacquers. One way of preparing modified alkyd resins is heating a bivalent acid or its anhydride with a multivalent alcohol and a fatty acid. In the fatty acid method dicarboxylic acid (anhydride), polyalcohol and fatty acid are heated to abt. 250¤C until the required acid number and the required viscosity are obtained. In the monoglyceride method, the fatty acids obtained after esterification of a suitable oil are used for the modification with glycerol to monoglyceride. Then dicarboxylic acid (anhydride) is added and the mixture is treated in the same manner as in the fatty acid method. In the solvent method the reaction is carried out in the presence of a solvent that is immiscible with water. The polyalcohols used most often are glycerol, pentaerythritol, trimethylolpropane and sorbitol. The principal polycarboxylic acids are, for instance, phthalic acid (anhydride) and maleic acid; the fatty acids of linseed, ricinus, soya bean and coconut oil are often used as fatty acids. Ester, copal and phenol resins, styrene and silicones may be used as modifying agents.

(Pre)polymers based on isocyanate groups, if so desired modified with acrylates or methacrylates, hydroxy-terminated polyethers or polyesters, if so desired modified with acrylates or methacrylates, epoxy resins, if so desired modified with acrylates or methacrylates, or polyesters based on epoxidized oils and acrylic or methacrylic acid may, for instance, be used as (modified) condensation polymers.

Vinyl polymers with allyl functionality: C = C - CH such as allyl(meth)acrylates or vinyl polymers with drying oil functionality may, for instance, be used as vinyl addition polymers.

Linseed oil, soya bean oil, sunflower oil, safflower oil, tall oil and conjugated soya bean oil or epoxidized drying oils may, for instance, be used as drying oil instead of the polymer.

The resin composition according to the invention is used by preference as such ('100%-solid') as a binding agent for, for instance, paint.

The resin composition according to the invention can be used as basic resin for alkyd dispersions.

The ester according to the invention comprises as carboxylic acid with 10-24 carbon atoms and at least one non-terminal ethylenically unsaturated double bond, for instance carboxylic acids or mixtures thereof with straight or branched chains such as 3-decenecarboxylic acid, 2-ethyldodecenecarboxylic acid, dodecenecarboxylic acid, 4-ethyldodecenecarboxylic acid and fatty acids with 16-20 carbon atoms.

Preferably $R^1$ is an alkyl group with 16-20 carbon atoms, in particular with a $-CH=CH-CH_2-CH=CH-$ group, and $R^2$ is preferably a bisallylether of a polyfunctional alcohol derivative.

Carboxylic acids with the structural unit: $-CH=CH-CH_2-CH=CH-$are highly suitable, because the diallylic hydrogen is easily eliminated under the influence of oxygen and, as such, acts as polymerization initiator.

According to a preferred embodiment of the invention the ester has the following formula:

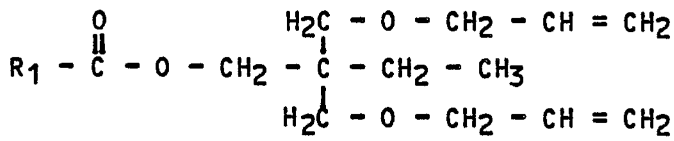

wherein $R^1$ is an alkyl radical with 16-20 carbon atoms, comprising the structural unit $-CH=CH-CH_2-CH=CH-$.

As allylether-containing group, a group is preferably chosen with the formula:

$-X-[O-R^3]_n$

where:
n = 1-5
X = a polyol derivative with 2-20 carbon atoms and a functionality of at least n + 1 and
$R^3$ = an allyl derivative.

Preferably, n = 2-4, consequently the drying properties are better.

Glycol, propanediol, butanediol, cyclohexanediol, 1,1,1-trimethylol propane, glycerol, pentaerythritol, sorbitol or 1,2,3-butanetriol may, for instance, be used as X.

$R^3$ may, for instance, be derived from a 1-alkene-3-ol such as 1-propylene-3-ol, 1-butylene-3-ol, 1-pentylene-3-ol and 2-cyclohexene-1-ol, but also from alkoxylated 1-alkene-3-ols. Preferably a 1-alkene-3-ol with fewer than 7 carbon atoms, in particular fewer than 5 carbon atoms is used.

The ester can be prepared by, for instance, esterification of an unsaturated fatty acid with an alcohol containing allyl groups such as trimethylolpropanediallylether, pentaerytritoldiallylether, tri methylolpropane monoallylether, butanediol monoallylether, cyclohexanediol monoallylether.

According to a preferred embodiment of the invention the ester contain one fatty acid residue and one allyl group per molecule.

The resin composition according to the invention can be simply prepared by mixing the ester with the polymer.

The resin composition according to the invention may contain the usual additives such as siccatives, pigments and stabilizers.

The resin compositions according to the invention can be used as bases for paint compositions in wall paints and wood paints.

The resin compositions according to the invention present a negligible emission of solvents if only the ester according to the invention is used as solvent and, in addition to the low solvent emission, they then also possess good coating properties, such as good drying properties, curing properties resistance to solvents, resistance to abrasion, resistance to chemicals, flexibility, gloss and resistance to scratching.

The ester according to the invention can be applied in compounds which are curable by radical polymerisation and in paint compositions which are airdryable.

The invention is elucidated with the following example, without, however, being limited thereto.

Example

60 parts by weight of an alkyd resin based on isophtalic acid, pentaerytritol and talloil fatty acid and prepared by a step by step preparation were solved in 40 parts by weight of reactive diluent mixture, which consisted 50 parts by weight of the reaction product (prepared at 240¤C) of 1 equivalent soyabean fatty acid and 1 equivalent monoallylether of trimethylolpropane, and 50 parts by weight of an oligomer prepared by esterification at 240¤C of trimellitic acid anhydride, dipentaerytritol and soyabean fatty acid (weight ratio 1 : 3 : 15). The weight percentage of solids of the resulting binding agent was 100% (viscosity 20 dP.s at 25¤C).

## Claims

1. Resin composition based on a polymer and an ester of an unsaturated fatty acid and an alcohol containing a terminal unsaturation, characterized in that, the resin composition contains as ester a compound with the formula:

$$R^1 - \overset{\overset{O}{\|}}{C} - O - R^2$$

where:
$R^1$ is an alkyl radical with 10-24 carbon atoms and at least one non-terminal ethylenically unsaturated bond and
$R^2$ is an organic group comprising one or more terminal allylether groups, and that,
the resin composition is substantially 100%-solid.

2. Resin composition according to claim 1, characterized in that $R^2$ = $-X-[O-R_3]_n$ where
n = 1-5
X = a polyol derivative with 2-20 carbon atoms and with a functionality of at least n + 1 and
$R^3$ = an allyl derivative.

3. Resin composition according to any one of claims 1-2, characterized in that the ester has the following formula:

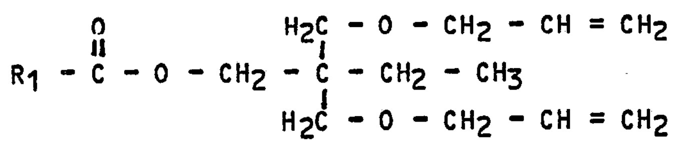

where $R^1$ is an alkyl radical with 16-20 carbon atoms comprising the structural unit $-CH=CH-CH_2-CH=CH-$.

4. Resin composition according to any one of claims 1-3, characterized in that the resin composition contains 20-99 wt% polymer and 1-80 wt% ester (the weight percentages being based on the total amount of polymer and ester).

5. Resin composition according to claim 4, characterized in that the resin composition contains 0,1-50% by weight of an oligomer.

6. Resin composition according to any one of claims 1-5, characterized in that the resin composition contains an alkyd resin as polymer.

7. Resin composition according to claim 6, characterized in that the alkyd resin is prepared in the presence of 3-20 wt% of a monoalcohol with between 5 and 13 carbon atoms.

8. Coating composition obtainable with the resin composition according to any one of claims 1-7.